Europäisches Patentamt

European Patent Office

Office européen des brevets

(11) Veröffentlichungsnummer : **0 073 032**
**B1**

# (12) EUROPÄISCHE PATENTSCHRIFT

(45) Veröffentlichungstag der Patentschrift :
03.12.86

(51) Int. Cl.⁴ : **H 01 H 85/32**

(21) Anmeldenummer : 82107624.7

(22) Anmeldetag : 20.08.82

(54) Schmelzsicherungslastschalter.

(30) Priorität : 21.08.81 DE 3133094

(43) Veröffentlichungstag der Anmeldung :
02.03.83 Patentblatt 83/09

(45) Bekanntmachung des Hinweises auf die Patenterteilung : 03.12.86 Patentblatt 86/49

(84) Benannte Vertragsstaaten :
AT BE CH DE FR GB IT LI NL SE

(56) Entgegenhaltungen :
FR-A- 2 331 881
FR-A- 2 414 249
GB-A- 1 124 991
GB-A- 1 177 135
GB-A- 2 058 493
ELECTRONIC DESIGN, Band 18, Nr. 1, 4. Januar 1970,
Seite 130, US, H. RAPHAEL: "Neon-bulb circuit doubles as pilot light and trouble light"
ELEKTOR BOOK 75, 1977, Seite 50, Canterbury, Kent,
GB, gedruckt in den Niederlanden, J.W. VAN BEEK:
"Fuse indicator"

(73) Patentinhaber : **Lindner GmbH Fabrik elektrischer
Lampen und Apparate
Lichtenhaidestrasse 15
D-8600 Bamberg (DE)**

(72) Erfinder : **Becker, Klaus, Dipl.-Ing.
Bamberger Str. 32
D-8602 Mülhausen (DE)**

(74) Vertreter : **Tergau, Enno et al
Patentanwälte Tergau & Pohl Postfach 11 93 47
Hefnersplatz 3
D-8500 Nürnberg 11 (DE)**

## Beschreibung

Die Erfindung betrifft einen Schmelzsicherungslastschalter mit den Merkmalen des Oberbegriffes des Anspruches 1.

Ein derartiger Schalter ist beispielsweise aus FR-A-2 331 881 in Verbindung mit FR-A-2 414 249 bekannt. Eine Sicherungspatrone ist in einem Gehäuse mittels einer Handhabe derart schwenkbar, daß ihre Kontaktkappen in Einschaltstellung zwischen zwei gehäusefesten Stromkontakten einliegen. Der mit dem Stromnetz verbundene Kontakt ist im folgenden kurz als « heißer » Kontakt und der mit dem Verbraucher verbundene Kontakt im folgenden kurz als « kalter » Kontakt bezeichnet.

Durch Schwenken des Schmelzsicherungseinsatzes in die Ausschaltstellung wird der Strompfad unterbrochen und der Verbraucher vom Netz abgeschaltet. In der Auschaltstellung kann nun der Schmelzsicherungseinsatz in bekannter Weise ausgetauscht werden.

Im Gehäuse des Schmelzsicherungslastschalters ist nach FR-A-2 414 249 außerdem eine elektrische Betriebszustandsanzeigevorrichtung vorgesehen derart, daß eine zwischen dem « kalten » Kontakt und dem Masseleiter über einen Vorschaltwiderstand betriebene Glimmlampe dann leuchtet, wenn die Schmelzsicherung eingeschaltet und in Ordnung ist. Diese Vorrichtung ist insbesondere insofern nachteilig als

— bei einem Phasenkurzschluß auf der « kalten » Sicherungsseite die Glimmlampe der Anzeigevorrichtung auch dann leuchtet, wenn die Sicherung durchgebrannt ist, und

— die Lebensdauer der Lichtquelle (z. B. Glimmlampe) aufgrund ihres Dauerbetriebes verhältnismäßig kurz ist, so daß bei deren Ausfall eine Fehlanzeige vorliegt. Insbesondere kann die Bedienungsperson bei Nichtleuchten der Lampe nicht ohne weiteres entscheiden, ob nur die Lampe defekt ist oder der Schmelzsicherungseinsatz auf einen Störfall angesprochen hat.

In der Zeitschrift « Electronic Design », Band 18, Nr. 1, 4. Januar 1970, S. 130, US, H. Raphael : « Neonbulb circuit doubles as pilot light and trouble light » ist eine Schaltung angegeben, bei der über eine Gasentladungslampe der Betriebszustand einer Schmelzsicherung angezeigt wird. Dies erfolgt durch einen parallel zur Schmelzsicherung liegenden Parallelstromkreis aus einem Kondensator und der Gasentladungslampe. Diese Anzeigevorrichtung kann nicht signifikant in Aktion treten, wenn kein Verbraucher an den gesicherten Wechselstromkreis angeschlossen ist. Zusätzlich ist in Ausschaltstellung die Anzeigevorrichtung weiterhin galvanisch mit der Stromführenden Phase gekoppelt. Damit ist ein hohes Sicherheitsrisiko verbunden.

Auch dem in der GB-A-1 177 135 gezeigten Sicherungsnetzwerk ist der vorstehend beschrieben Nachteil zu eigen. Hinzu kommt, daß hier keine blinkende Anzeigevorrichtung vorgesehen ist. Im Gegenteil kann durch die in diesem druckschriftlich vorveröffentlichten Stand der Technik beschriebene Anordnung das Überwachungspersonal nicht zweifelsfrei entscheiden, ob bei nicht leuchtender Anzeigelampe diese defekt oder der Schmelzsicherungseinsatz in Ordnung ist.

Vorbeschriebene Nachteile treffen auch auf die im « Elektor Book 75 », 1977, S. 50, Canterbury, Kent, GB, J.W. van Beek : « Fuse indicator » gezeigte Schaltungsanordnung zu.

Der Erfindung liegt die Aufgabe zugrunde, einen Schmelzsicherungslastschalter mit einer Betriebszustandsanzeigevorrichtung für den Schmelzsicherungseinsatz derart auszubilden, daß die Bedienungsperson schnell und sicher erkennen kann, in welchem Zustand sich der Sicherungseinsatz befindet. Dabei soll in Ausschaltstellung eine vollständige galvanische Trennung der Anzeigevorrichtung von der stromführenden Phase gewährleistet sein. Diese Aufgabe wird durch die kennzeichnenden Merkmale des Anspruches 1 gelöst.

Zunächst erweist sich der erfindungsgemäße Schmelzsicherungslastschalter insofern als vorteilhaft, als daß nur der Fehlerfall (Sicherung defekt) angezeigt wird. Die Lichtquelle (Glimmlampe) der Anzeigevorrichtung zeigt einen Störfall insbesondere auch dann an, wenn ein Phasenanschluß auf der « kalten » Sicherungsseite vorliegt.

Durch die Anordnung der Kontakte zur elektrischen Verbindung der Kontaktkappe(n) des Schmelzsicherungseinsatzes mit der Anzeigevorrichtung wird in Ausschaltstellung eine vollständige galvanische Trennung der gesamten Anzeigevorrichtung von der übrigen stromführenden Teilen des Sicherungslastschalters gewährleistet, so daß das Auswechseln des Schmelzsicherungseinsatzes von der Bedienungsperson gefahrlos vorgenommen werden kann.

Durch die Anordnung eines hochohmigen Hilfswiderstandes zwischen dem durch den Schmelzsicherungseinsatz abgesicherten Phasenleiter und dem Neutralleiter tritt die Anzeigevorrichtung auch dann in Funktion, wenn auf der « kalten » Seite der Sicherung kein Verbraucher angeschlossen ist. Wahlweise kann dieser hochohmige Hilfswiderstand auch mit einem anderen geerdeten Bauteil, vorzugsweise der Montagesammelschiene, verbunden sein.

Dies kann direkt oder mittels eines elektrischen Abgriffs erfolgen. Beispielsweise kann bei Verbindung des Phasenleiters mit der Sammelschiene als elektrischer Abgriff die Haltekralle des Sicherungsschalters dienen, mit der er auf der Sammelschiene befestigbar ist. Geräteintern ist dann der Hilfswiderstand mit dieser Haltekralle verbunden.

Die durch den Hilfswiderstand entstande elektrische Verbindung zwischen Phasen- und Neutralleiter bzw. Erdleiter wird beim Verbringen des Schmelzsicherungseinsatzes in die Ausschaltstellung in vorteilhafter und einfacher Weise unterbrochen.

In weiterer Ausgestaltung der Erfindung wird eine elektrische Zusatzanordnung vorgeschlagen, die darin besteht, daß der Neutralleiter oder gegebenenfalls auch der Erdleiter mit einem Anschluß des Entladungswiderstandes über eine Entkopplungsdiode und einen Widerstand elektrisch verbunden ist. Durch diese Zusatzanordnung kann nun die Bedienungsperson mit einem Blick den Zustand der Sicherung bzw. den Schaltzustand des gesamten Schmelzsicherungslastschalters erkennen. Dabei bedeuten :

a) Glimmlampe leuchtet dauernd : Die Sicherung ist in Ordnung und eingeschaltet.

b) Glimmlampe leuchtet nicht : Der Sicherungslastschalter ist ausgeschaltet.

c) Glimmlampe blinkt : Die Sicherung ist defekt und eingeschaltet.

Diese Anzeigevorrichtung, welche die unterschiedlichen Betriebszustände a)-c) unterscheidet, ist dabei aus einfachsten elektrischen Schaltmitteln aufgebaut.

Um die Lebensdauer der Glimmlampe zu verlängern, kann in vorteilhafter Weise die Verbindung zwischen Glimmlampe und Neutralleiter ein- und ausschaltbar sein, wodurch die Bedienungsperson den Dauerleuchtzustand abschalten kann. Ist der Schalter als Tastschalter ausgebildet, so kann bei Betätigung desselben die Bedienungsperson mit einem kurzen Blick erkennen, in welchem Zustand sich die Schaltanlage befindet. Es ist auch möglich, einen (Tast)-Schalter für mehrere Sicherungen mit mehreren Anzeigevorrichtungen zu verwenden, so daß bei Betätigung eines Tastschalters eine ganze Reihe von Anzeigeglimmlampen dauerleuchtet, falls die Voraussetzungen nach a) erfüllt sind.

Vorteilhafterweise kann die gesamte Anzeigevorrichtung in einem in das Lastschaltergehäuse einschiebbaren Schaltschieber gelagert sein. Dadurch besteht die Möglichkeit, ohne wesentliche Veränderungen oder Einbauten je nach Kundenwunsch den Schmelzsicherungslastschalter entweder mit oder ohne Anzeigevorrichtung ausliefern zu können. Auch kann der Kunde einen bereits installierten Lastschalter jederzeit nachträglich und gefahrlos mit dem jeweils gewünschten Schaltschieber bestücken.

Es ist bekannt, an langgestreckten Schmelzsicherungseinsätzen sogenannte Auslösekennmelder an einem stirnseitigen Ende anzuordnen. Da oftmals Sicherungslastschalter in schlecht beleuchteten Kellerräumen montiert sind, ist es besonders vorteilhaft, wenn die Glimmlampe einen derartigen Auslösekennmelder beleuchtet. Damit hat die Bedienungsperson eine doppelte Sicherungskontrolle.

Eine räumlich günstige und kontaktsichere Anordnung der weiteren Kontakte wird dadurch erreicht, daß die Anzeigevorrichtung wenigstens einen weiteren Kontakt aufweist, der als neben einem Stromkontakt liegende Kontaktfeder ausgebildet ist und ausschließlich in Einschaltstellung geschlossen ist.

Die Erfindung wird im folgenden unter Bezugnahme auf die Zeichnungen näher erläutert. Es stellen dar :

Figur 1 eine Prinzipschaltskizze für eine Ausführungsform der Erfindung ;

Figur 2 eine Prinzipschaltskizze für eine andere Ausführungsform der Erfindung mit abschaltbarer Zusatzeinrichtung für die Überprüfung der Schaltanlage ;

Figur 3 eine Prinzipschaltskizze für eine weitere Ausführungsform der Erfindung mit geerdetem Hilfswiderstand.

Der Schmelzsicherungslastschalter weist einen in einem Gehäuse zwischen einer Einschaltstellung und einer Ausschaltstellung manuell schwenkbaren Schmelzsicherungseinsatz 1 auf, dessen Kontaktkappen 2, 3 in Einschaltstellung zwei gehäusefeste Stromkontakte 4, 5 beaufschlagen. Der mit 4 bezeichnete Stromkontakt ist der dem Verbraucher zugewandte « kalte » Kontakt, der mit 5 bezeichnete der dem Stromnetz zugewandte « heiße » Kontakt. Befindet sich der Schmelzsicherungseinsatz 1 in Einschaltstellung, so ist der zwischen den Anschlußkontakten 6, 7 liegende, aus Schmelzsicherungseinsatz 1 und Phasenleiter 8 gebildete, Strompfdad geschlossen.

Zwischen den weiteren Anschlußkontakten 9, 10 ist ein elektrischer Schalter 11 angeordnet, der den Strompfad über den Masseleiter 12 schließt oder unterbricht und der mechanisch an die Schwenkschaltbewegung des Schmelzsicherungseinsatzes 1 gekoppelt ist, was durch die gestrichelte Linie 13 angedeutet ist.

Die Betriebszustandsanzeigevorrichtung, im folgenden kurz als Anzeigevorrichtung 14 bezeichnet, besteht im wesentlichen aus einer als Glimmlampe 15 ausgebildeten Lichtquelle, einem Kondensator 16, einem Ladewiderstand 17, einer zu diesem in Reihe geschalteten ersten Diode 18 sowie einem Entladewiderstand 19, der in Reihe mit der Glimmlampe 15 einen Parallelzweig 20 zu dem Hauptzweig 21 bildet, in welchem der Kondensator 16 liegt. Mit ihren Anschlußleitungen 22, 23 ist die Anzeigevorrichtung 14 mit gesonderten, von den Stromkontakten 4, 5 elektrisch und räumlich getrennten weiteren Kontakten 24, 25 mit den Kontaktkappen 2, 3 des Schmelzsicherungseinsatzes 1 und den Stromkontakten 4, 5 in Einschaltstellung verbindbar.

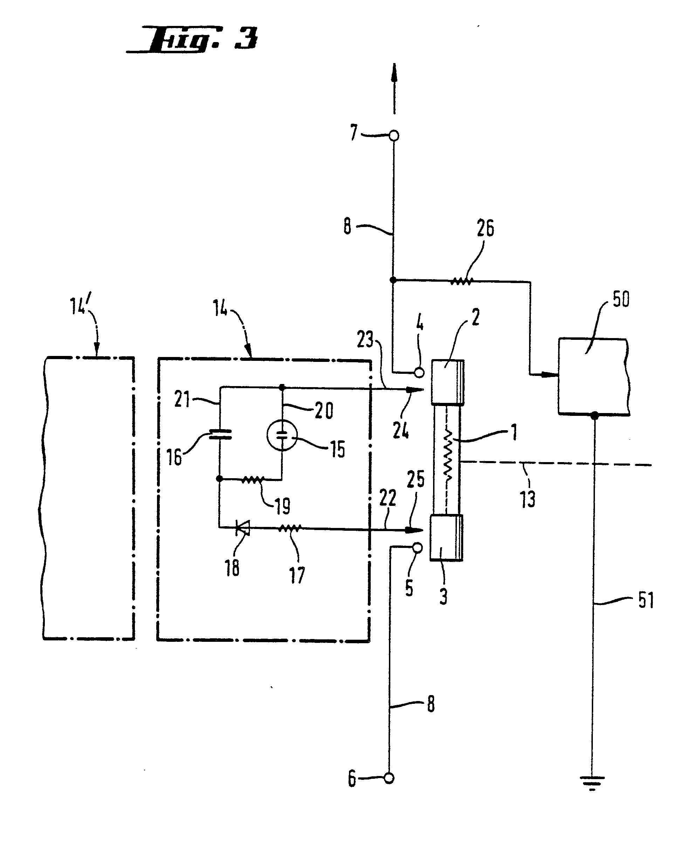

Auf der « kalten » Seite des Schmelzsicherungseinsatzes 1 ist der Phasenleiter 8 mit dem Masseleiter 12 über einen hochohmigen Hilfswiderstand 26 verbunden. Dieser Hilfswiderstand kann auch, wie in Fig. 3 dargestellt, mit einem geerdeten Bauteil, beispielsweise der Sammelschiene 50 verbunden sein.

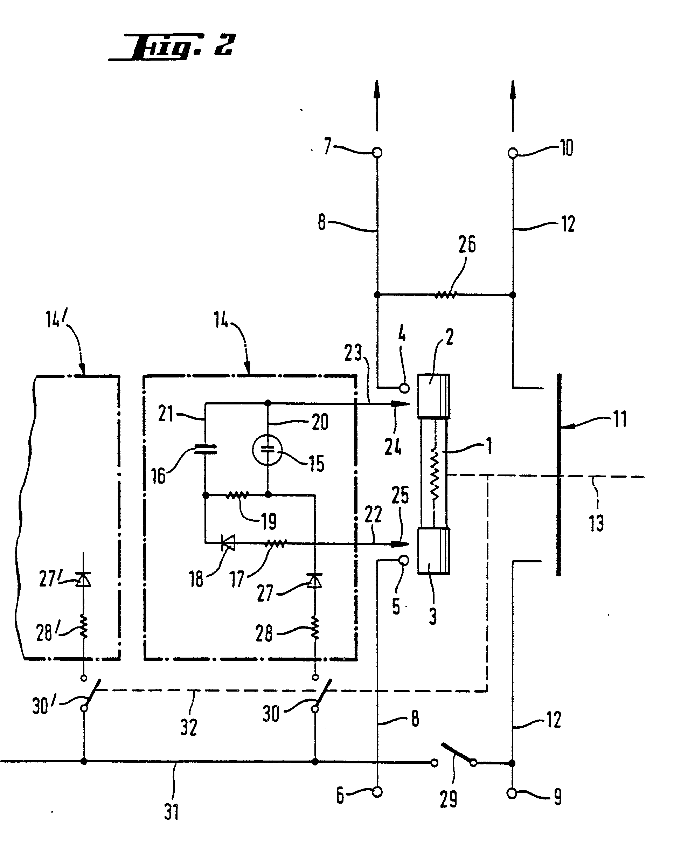

Der Parallelzweig 20 kann bei einer besonderen Ausführungsform (Fig. 2) beispielsweise zwischen der Glimmlampe 15 und dem Entladewiderstand 19 über eine zweite Diode 27 und einen weiteren Widerstand 28 mit dem Masseleiter 12 verbunden werden, wobei diese Verbindung dauerhaft sein kann oder vorzugsweise mittels eines manuell zu betätigenden Ein-Aus-Schalters oder eines Tasters 29 schaltbar ist.

Die Funktion des Schmelzsicherungslastschalters mit Anzeigevorrichtung ist folgende :

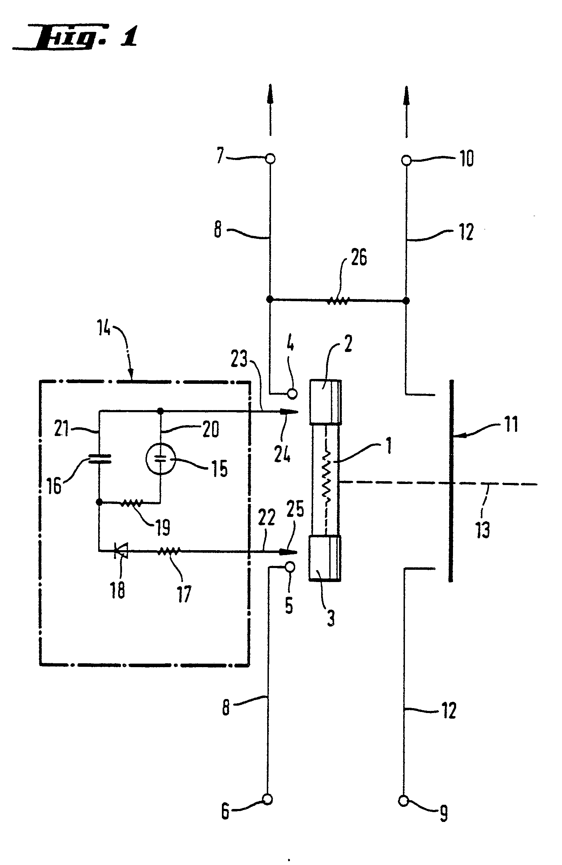

Befindet sich der Schmelzsicherungseinsatz 1 in der in der Zeichnung (Fig. 1-3) gezeigten Ausschaltstellung, so sind der Phasenleiter 8 und gegebenenfalls der Masseleiter 12 unterbrochen. Wird von der Bedienungsperson der Schmelzsicherungslastschalter eingeschaltet, so überbrückt der Schmelzsicherungseinsatz 1 die Stromkontakte 4, 5, wodurch der zwischen den Anschlußkontakten 6, 7 liegende Strompfad geschlossen wird. Desweiteren wird über die Kontakte 24, 25 die Anzeigevorrichtung 14 parallel zum Schmelzsicherungseinsatz 1 am Phasenleiter angeschlossen. Allerdings erfolgt durch deren Hauptzweig 21 sowie die Anschlußleitungen 22, 23 und die darin enthaltenen elektrischen Bauteile kein erwähnenswerter Stromfluß, da der Gesamtwiderstand der Anzeigevorrichtung sehr viel höher ist als der Gesamtwiderstand des Schmelzsicherungseinsatzes 1. Spricht der Schmelzsicherungseinsatz 1 auf einen Störfall an und schmilzt durch, so steigt die Spannung am Eingang der Anzeigevorrichtung an und die Blinkschaltung, die aus den Bauteilen 15, 16, 17, 18, 19 besteht, wird in Betrieb gesetzt. Der Hilfswiderstand 26 sorgt für eine Verbindung zum Masseleiter 12 in jedem Fall dann, wenn an den Anschlußkontakten 7, 10 kein Verbraucher angeschlossen ist. Dabei wird über den Ladewiderstand 17 und die erste Diode 18 der Kondensator 16 aufgeladen und bei Erreichen der Zündspannung der Glimmlampe 15 über diese sowie den Entladewiderstand 19 wieder entladen, bis die Brennspannung der Glimmlampe unterschritten wird. Die Folge ist ein Blinken der Glimmlampe 15, wenn der Schmelzsicherungseinsatz angesprochen hat.

Durch die Bauteile 27, 28, 29 wird die Anzeigevorrichtung des Schmelzsicherungslastschalters insofern weiter ausgebildet, als bei geschlossenem Ein-Aus-Schalter (Taster) 29 bei intaktem Schmelzsicherungseinsatz 1 in Einschaltstellung über die zweite Diode 27 (Entkopplungsdiode) und den weiteren Widerstand 28 die Glimmlampe 15 dauernd mit Strom versorgt wird und bei intaktem Schmelzsicherungseinsatz 1 dauernd leuchtet. Dadurch wird ein erster Betriebszustand (vgl. oben a) angezeigt. Brennt der Schmelzsicherungseinsatz 1 durch, so beginnt die Glimmlampe 15 in der beschriebenen Weise zu blinken, wodurch ein zweiter Betriebszustand (vgl. oben c) angezeigt wird. Ist der Schmelzsicherungslastschalter insgesamt ausgeschaltet, so erlischt auch die Glimmlampe, wodurch ein dritter Betriebszustand (vgl. oben b) angezeigt wird. Um die Lebensdauer der Glimmlampe zu erhöhen, kann der Ein-Aus-Schalter 29 beispielsweise als Tastschalter ausgebildet sein und nur zu einer kurzen « Sicherungsdiagnose » von der Bedienungsperson betätigt werden. Dabei ist es möglich, daß über nur einen Schalter 29 eine ganze Reihe von Schmelzsicherungslastschaltern mit daran angeschlossenen Anzeigevorrichtungen 14, 14' usw. diagnostiziert werden können, wobei dann natürlich Maßnahmen zur gegenseitigen elektrischen Entkopplung der Anzeigevorrichtungen 14, 14' getroffen werden müssen, etwa in Form von weiteren Dioden 27' und weiteren Widerständen 28'.

Die Funktion der Vorrichtung ist dann gewährleistet, wenn die wesentlichenelektrischen Bauteile etwa die nachstehend aufgeführten Werte haben :

Kondensator 16 : 0,33 µF
Ladewiderstand 17 : 2,2 MΩ
weiterer Widerstand 28 : 330 KΩ
Entladewiderstand 19 : 27 KΩ
Hilfswiderstand 26 : 4,7 MΩ

In Fig. 2 ist eine weitere Ausführungsform des Schmelzsicherungslastschalters dargestellt. Es sind weitere Schalter 30, 30' angeordnet, welche die Anzeigevorrichtung über die Dioden 27, 27' und Widerstände 28, 28' und über eine Sammelleitung 31 mit dem Schalter 29 verbinden. Diese Schalter 30, 30' sind mechanisch mit dem Schalter 11 gekoppelt, was durch die gestrichelte Linie 32 angedeutet wird. Hierdurch wird sichergestellt, daß die Blinkschaltung genau in Einschaltstellung des Schmelzsicherungslastschalters elektrisch mit der Sammelleitung 31 verbunden ist.

In Fig. 3 ist eine weitere Ausführungsform der Erfindung dargestellt, welche im Vorstehenden bereits erwähnt worden ist. Auch bei dieser Ausführungsform stimmt die Schaltung im wesentlichen mit derjenigen der Fig. 1 überein. In Abweichung von dieser ist jedoch der Hilfswiderstand 26 nicht mit dem Masseleiter 12 verbunden, sondern stattdessen mit der Sammelschiene 50, welche über eine Leitung 51 geerdet ist. Diese Ausbildung der Schaltung kann besonders vorteilhaft dadurch verwirklicht werden, daß der Widerstand beim Aufstecken auf die Sammelschiene automatisch kontaktiert wird. Die Kontaktierung kann dabei direkt oder mittels einer metallischen Haltekralle, welche den Schmelzsicherungsschalter (lösbar) auf der Sammelschiene festhält, erfolgen. Im zuletzt genannten Falle kann der Hilfswiderstand 26 geräteintern mit der Haltekralle verbunden werden. Diese Ausführungsform hat den Vorteil, daß der Hilfswiderstand 26 somit auch in Geräten ohne Null-Leiteranschluß schaltungsgerecht verwendet werden kann, ohne daß es eines separaten Klemm- oder Schraub-Anschlusses bedarf. Es reicht vielmehr die Erdung der gemeinsamen Sammelschiene aus, um gegebenenfalls eine ganze Batterie darauf befestigter Schmelzsicherungslastschalter jeweils automatisch mit dem Hilfspotential zu beaufschlagen.

## Patentansprüche

1. Schmelzsicherungslastschalter mit einem manuell in eine Einschaltstellung schwenkbaren Schmelzsicherungseinsatz (1),

dessen Kontaktkappen (2, 3) in dieser Einschaltstellung zwei gehäusefeste Stromkontakte (4, 5) kurzschließen

und einer eine Lichtquelle enthaltenden Betriebszustandsanzeigevorrichtung für den Schmelzsicherungseinsatz (1),

die wenigstens in Einschaltstellung elektrisch mit den beiden Kontaktkappen (2, 3) des Schmelzsicherungseinsatzes (1) und den beiden Stromkontakten (4, 5) verbunden und parallel zu diesen geschaltet ist, und einen relativ zum Schmelzsicherungseinsatz (1) sehr hohen elektrischen Widerstand aufweist, dadurch gekennzeichnet, daß

die Anzeigevorrichtung (14) als an sich bekannte Blinkvorrichtung ausgebildet ist, die im wesentlichen aus einem Kondensator (16), einer diesem vorgeschalteten ersten Diode (18) und einem Ladewiderstand (17), sowie einer parallel zum Kondensator (16) geschalteten Glimmlampe (15) in Reihe mit einem Entladungswiderstand (19) besteht, und daß

auf der dem Verbraucher zugewandten « kalten » Seite des Schmelzsicherungseinsatzes (1) der durch diesen abgesicherte Phasenleiter (8) mit dem Neutralleiter (12) oder dessen Anschlußklemme (10) durch einen hochohmigen Hilfswiderstand (26) verbunden ist.

2. Schmelzsicherungslastschalter nach Anspruch 1, dadurch gekennzeichnet, daß der Phasenleiter (8) auf seiner dem Verbraucher zugewandten « kalten » Seite des Schmelzsicherungseinsatzes (1) über den hochohmigen Hilfswiderstand (26) direkt oder mittels eines elektrischen Abgriffes mit einer geerdeten Sammelschiene (50) verbunden ist, an der der Schmelzsicherungslastschalter allein oder im Verband mit mehreren solcher Schalter befestigt ist.

3. Schmelzsicherungslastschalter nach Anspruch 1 oder 2, dadurch gekennzeichnet, daß` der mit dem Entladungswiderstand (19) verbundene Anschluß der Glimmlampe (15) über eine zweite Diode (27) und einen weiteren Widerstand (28) mit dem Neutralleiter (12) verbunden ist.

4. Schmelzsicherungslastschalter nach Anspruch 3, dadurch gekennzeichnet, daß der mit dem Kondensator (16) verbundene Anschluß des Entladungswiderstandes (19) über die zweite Diode (27) und den weiteren Widerstand (28) mit dem Neutralleiter (12) verbunden ist.

5. Schmelzsicherungslastschalter nach einem der vorgenannten Ansprüche, dadurch gekennzeichnet, daß die Verbindung über die zweite Diode (27) und den weiteren Widerstand (28) zum Neutralleiter (12) ein- und ausschaltbar oder tastbar ist.

6. Schmelzsicherungslastschalter nach Anspruch 5, dadurch gekennzeichnet, daß er Bestandteil einer Batterie von Sicherungslastschaltern ist, deren gleichzeitige Verbindung zum Neutralleiter über einen einzigen gemeinsamen Schalter oder Taster (29) hergestellt wird.

7. Schmelzsicherungslastschalter, bei welchem der Schmelzsicherungseinsatz in einem in das Schaltergehäuse einschiebbaren Schaltschieber gelagert ist, dadurch gekennzeichnet, daß die Anzeigevorrichtung (14) im/am Schaltschieber angeordnet ist und über Dauerkontakte (24, 25) mit den Kappen (2, 3) des Schmelzsicherungseinsatzes (1) verbunden ist.

8. Schmelzsicherungslastschalter nach einem der vorgenannten Ansprüche, dadurch gekennzeichnet, daß die Glimmlampe (15) den an einem Ende des Schmelzsicherungseinsatzes (1) befindlichen Ort des Auslösekennmelders beleuchtet.

9. Schmelzsicherungslastschalter nach einem der vorgenannten Ansprüche, dadurch gekennzeichnet, daß die Anzeigevorrichtung (14) mindestens einen weiteren Kontakt aufweist, der als neben einem Stromkontakt (4, 5) liegende Kontaktfeder ausgebildet ist und ausschließlich in Einschaltstellung geschlossen ist.

10. Schmelzsicherungslastschalter nach einem der vorgenannten Ansprüche, dadurch gekennzeichnet, daß die Glimmlampe (15) durch die Reihenschaltung aus einer Triggerdiode und einer Leuchtdiode ersetzt wird.

11. Schmelzsicherungslastschalter nach Anspruch 10, dadurch gekennzeichnet, daß anstelle der Triggerdiode eine Glimmlampe benutzt wird.

12. Schmelzsicherungslastschalter nach einem der vorgenannten Ansprüche, dadurch gekennzeichnet, daß der Entladewiderstand (19) mittels der zweiten Diode (27) und dem weiteren Widerstand (28) über einen Schalter (30) mit dem Neutralleiter (12) oder hilfsweise mit der geerdeten Sammelschiene (50) verbunden ist, wobei der Schalter (30) nur in Einschaltstellung des Schmelzsicherungslastschalters eingeschaltet ist.

13. Schmelzsicherungslastschalter nach einem der vorgenannten Ansprüche, dadurch gekennzeichnet, daß der oder die weiteren Kontakte aus leitendem Kunststoff, beispielsweise Schaumstoff, bestehen.

**Claims**

1. Fused load breaker comprising

a fuse link (1) which can be manually rotated into a switched-on position,

the contact caps (2, 3) of which short-circuit two current contacts (4, 5), fixed to the housing, in this switched-on position

an operating condition indicating device, containing a light source, for the fuse link (1),

which is electrically connected, at least in the switched-on position, to the two contact caps (2, 3) of the fuse link (1) and the two current contacts (4, 5) and is connected in parallel with these and is provided with an electric resistance which is very high relative to the fuse link (1), characterized in that

the indicating device (14) is constructed as a flashing device, known *per se*, which essentially consists of a capacitor (16), a first diode (18) preceding the latter, and a charging resistor (17), and a glow lamp (15) connected in parallel with the capacitor (16), in series with a discharge resistor (19), and that

on the « cold » side, facing the load, of the fuse link (1), the phase conductor (8) fused by it is connected to the neutral conductor (12) or its connecting terminal (10) by a high-resistance auxiliary resistor (26).

2. Fused load breaker according to Claim 1, characterized in that the phase conductor (8) is connected on its « cold » side, facing the load, of the fuse link (1) directly or by means of an electric tap via the high-resistance auxiliary resistor (26) to an earthed busbar (50) on which the fused load breaker is mounted by itself or in conjunction with several such breakers.

3. Fused load breaker according to Claim 1 or 2, characterized in that the connection, connected to the discharge resistor (19), of the glow lamp (15) is connected via a second diode (27) and another resistor (28) to the neutral conductor (12).

4. Fused load breaker according to Claim 3, characterized in that the connection, connected to the capacitor (16), of the discharge resistor (19) is connected via the second diode (27) and the other resistor (28) to the neutral conductor (12).

5. Fused load breaker according to one of the preceding claims, characterized in that the connection via the second diode (27) and the other resistor (28) to the neutral conductor (12) can be switched on and off or momentarily switched.

6. Fused load breaker according to Claim 5, characterized in that it is a component of a bank of fused load breakers the simultaneous connection of which to the neutral conductor is established via a single common switch or momentary-contact switch (29).

7. Fused load breaker, in which the fuse link is supported in a switching slider which can be inserted into the switch housing, characterized in that the indicating device (14) is arranged in/on the switching slider and is connected via permanent contacts (24, 25) to the caps (2, 3) of the fuse link (1).

8. Fused load breaker according to one of the preceding claims, characterized in that the glow lamp (15) illuminates the location of the trip operation indicator located at one end of the fuse link (1).

9. Fused load breaker according to one of the preceding claims, characterized in that the indicating device (14) has at least one further contact which is constructed as a contact spring located adjacently to a current contact (4, 5) and is exclusively closed in the switched-on position.

10. Fused load breaker according to one of the preceding claims, characterized in that the glow lamp (15) is replaced by a series circuit of a trigger diode and a light-emitting diode.

11. Fused load breaker according to Claim 10, characterized in that a glow lamp is used instead of the trigger diode.

12. Fused load breaker according to one of the preceding claims, characterized in that the discharge resistor (19) is connected by means of the second diode (27) and the other resistor (28) via a switch (30) to the neutral conductor (12) or as an auxiliary measure to the earthed busbar (50), the switch (30) being switched on only in the switched-on position of the fused load breaker.

13. Fused load breaker according to one of the preceding claims, characterized in that the contact or the other contacts consist of conductive plastic, for example foam material.

**Revendications**

1. Interrupteur sous charge à fusible avec

un élément fusible (1) pouvant être amené manuellement par pivotement en une position de fermeture de circuit,

dont les capuchons de contact (2, 3) court-circuitent dans cette position de fermeture de circuit, deux contacts de courant (4, 5) solidaires du boîtier,

et un dispositif indicateur d'état de fonctionnement, contenant une source de lumière, pour l'élément fusible (1),

qui au moins en position de fermeture de circuit, est relié électriquement aux deux capuchons de contact (2, 3) de l'élément fusible (1) et aux deux contacts de courant (4, 5) et leur est connecté en parallèle, et qui présente une résistance électrique très élevée par rapport à l'élément fusible (1), caractérisé en ce que

le dispositif indicateur (14) est réalisé en tant que dispositif clignotant connu en soi, qui est constitué essentiellement par un condensateur (16), une première diode (18) connectée en série avec celui-ci et une résistance de charge (17), ainsi qu'une lampe à incandescence (15) connectée en parallèle avec le condensateur (16), en série avec une résistance de décharge (19), et en ce que

sur le côté « froid » situé vers le consommateur de l'élément fusible (1), le conducteur de phase (8) protégé par ce dernier est relié au conducteur neutre (12) ou à sa borne de connexion (10) par une résistance auxiliaire (26) de forte valeur.

2. Interrupteur sous charge à fusible suivant la revendication 1, caractérisé en ce que le conducteur de phase (8) est relié, sur son côté « froid » dirigé vers le consommateur de l'élément fusible (1), par l'intermédiaire de la résistance auxiliaire (26) de forte valeur, directement ou au moyen d'une dérivation électrique, à une barre collectrice (50) mise à la terre, sur laquelle l'interrupteur sous charge à fusible est fixé seul ou en combinaison avec plusieurs de ces interrupteurs.

3. Interrupteur sous charge à fusible suivant la revendication 1 ou 2, caractérisé en ce que la connexion reliée à la résistance de décharge (19), de la lampe à incandescence (15) est reliée par une seconde diode (27) et une autre résistance (28) au conducteur neutre (12).

4. Interrupteur sous charge à fusible suivant la revendication 3, caractérisé en ce que la connexion reliée au condensateur (16), de la résistance de décharge (19) est reliée par la seconde diode (27) et l'autre résistance (28) au conducteur neutre (12).

5. Interrupteur sous charge à fusible suivant une des revendications précédentes, caractérisé en ce que la liaison par l'intermédiaire de la seconde diode (27) et l'autre résistance (28) vers le conducteur neutre (12), peut être fermée et coupée ou manipulée.

6. Interrupteur sous charge à fusible suivant la revendication 5, caractérisé en ce qu'il fait partie d'une batterie d'interrupteurs sous charge de sécurité, dont la liaison simultanée vers le conducteur neutre est établie par l'intermédiaire d'un unique interrupteur ou manipulateur (29) commun.

7. Interrupteur sous charge à fusible, dans lequel l'élément fusible est supporté dans un coulisseau de montage pouvant être glissé dans le boîtier d'interrupteur, caractérisé en ce que le dispositif indicateur (14) est agencé dans/sur le coulisseau de montage et est relié par des contacts permanents (24, 25) aux capuchons (2, 3) de l'élément fusible (1).

8. Interrupteur sous charge à fusible suivant une des revendications précédentes, caractérisé en ce que la lampe à incandescence (15) illumine l'emplacement, situé à une extrémité de l'élément fusible (1), de l'indicateur de déclenchement.

9. Interrupteur sous charge à fusible suivant une des revendications précédentes, caractérisé en ce que le dispositif indicateur (14) présente au moins un autre contact, qui est réalisé en tant que ressort situé à côté d'un contact de courant (4, 5) et est fermé exclusivement en position de fermeture de circuit.

10. Interrupteur sous charge à fusible suivant une des revendications précédentes, caractérisé en ce que la lampe à incandescence (15) est remplacée par le montage série d'une diode d'amorçage et d'une diode luminescente.

11. Interrupteur sous charge à fusible suivant la revendication 10, caractérisé en ce qu'au lieu de la diode d'amorçage, une lampe à incandescence est utilisée.

12. Interrupteur sous charge à fusible suivant une des revendications précédentes, caractérisé en ce que la résistance de décharge (19) est reliée au moyen de la seconde diode (27) et l'autre résistance (28), par l'intermédiaire d'un commutateur (30), au conducteur neutre (12), ou accessoirement à la barre collectrice (50) mise à la terre, le commutateur (30) n'étant fermé qu'en position de fermeture de circuit de l'interrupteur sous charge à fusible.

13. Interrupteur sous charge à fusible suivant une des revendications précédentes, caractérisé en ce que le ou les autres contacts sont faits de matière synthétique, par exemple foisonnée, conductrice.

0 073 032

Fig. 1

Fig. 2

**Fig. 3**